Europäisches Patentamt

European Patent Office

Office européen des brevets

(19)

(11) Veröffentlichungsnummer : **0 327 540 B1**

(12)

# EUROPÄISCHE PATENTSCHRIFT

(45) Veröffentlichungstag der Patentschrift :
25.09.91 Patentblatt 91/39

(21) Anmeldenummer : 87906555.5

(22) Anmeldetag : 16.10.87

(86) Internationale Anmeldenummer :
PCT/AT87/00059

(87) Internationale Veröffentlichungsnummer :
WO 88/03295 05.05.88 Gazette 88/10

(51) Int. Cl.⁵ : **G07C 9/00, G07B 15/04, G07C 9/02**

(54) KONTROLLEINRICHTUNG FÜR DATENTRÄGER.

(30) Priorität : 23.10.86 AT 2820/86
23.10.86 AT 2819/86
23.10.86 AT 2818/86

(43) Veröffentlichungstag der Anmeldung :
16.08.89 Patentblatt 89/33

(45) Bekanntmachung des Hinweises auf die
Patenterteilung :
25.09.91 Patentblatt 91/39

(84) Benannte Vertragsstaaten :
AT BE CH DE FR GB IT LI LU NL SE

(56) Entgegenhaltungen :
EP-A- 0 040 544
EP-A- 0 057 602
EP-A- 0 061 373
EP-A- 0 198 642

(56) Entgegenhaltungen :
CA-A- 1 184 658
GB-A- 2 164 825
US-A- 3 806 874
US-A- 4 325 146
US-A- 4 338 587

(73) Patentinhaber : Skidata Computer
Gesellschaft m.b.H.
Berchtesgadner Strasse 8
A-5083 Gartenau - St. Leonhard (AT)

(72) Erfinder : KOCZNAR, Wolfram
Lehmweg 16a
A-6020 Innsbruck (AT)
Erfinder : WALLERSTORFER, Kurt
Irrsdorf 130
A-5204 Strasswalchen (AT)

(74) Vertreter : Torggler, Paul, Dr.
Wilhelm-Greil-Strasse 16
A-6020 Innsbruck (AT)

EP 0 327 540 B1

## Beschreibung

Die Erfindung betrifft eine Kontrollstation zur Überprüfung von Daten in Datenträgern, insbesondere bei der Kontrolle einer Zutrittsberechtigung oder dergleichen, mit einer Kontrolleinrichtung zum Lesen von einzusteckenden, passiven Datenträgern, auf denen die Daten in beispielsweise magnetischer oder optischer Form gespeichert sind, wobei das Kontrollergebnis an zumindest eine periphere Einrichtung, insbesondere an eine Zutrittssperre weitergeleitet wird. Derartige Kontrollstationen werden für verschiedene Verwendungszwecke eingesetzt, etwa an Schiliftanlagen, zum Überprüfen oder Entwerten von Fahrkarten, in Parkgaragen zur Freigabe der Einfahrt oder Ausfahrt etc. Das Einschieben der passiven Datenträger, vorwiegend Magnetkarten, Strichcodekarten, auch Lochkarten usw., in den Aufnahmeschlitz eines Lesegerätes der Kontrollstation erfordert einen relativ hohen Zeitaufwand und verursacht den Benützern Unannehmlichkeiten bei der Handhabung.

Eine derartige Kontrollstation ist beispielsweise der CA-A-1184658 zu entnehmen. Sie dient zur Kontrolle von mit einem abreißbaren Kontrollabschnitt versehenen, üblichen Eintrittskarten, auf denen zwei verschiedene, maschinenlesbare Datencodes vorgesehen sind, von denen einer sichtbar und der zweite zur Erschwerung von Fälschungen unsichtbar bzw. verdeckt angebracht ist. Die Eintrittskarten werden durch einen Aufnahmeschlitz in die Kontrollstation eingeschoben, in der zwei Datenleseeinrichtungen enthalten sind. Die gelesenen Daten werden verglichen, und bei Übereinstimmung der sichtbaren und der unsichtbaren Daten wird die Eintrittskarte als gültig betrachtet, der Kontrollabschnitt abgerissen, und die Eintrittskarte an den Benützer retourniert. Die gültige Eintrittskarte schaltet in der Folge eine Ampel auf grün und öffnet ein Drehkreuz. Wird durch fehlende Übereinstimmung eine Fälschung erkannt, blinkt einr rotes Licht der Ampel, ein Alarm ertönt und die gefälschte Karte wird wieder ausgeworfen.

Es sind insbesondere für die Personenidentifizierung auch aktive Datenträger bekannt, wobei der Datenträger selbst elektronische Bauteile, wie Rechner, Display usw. enthält. Biespiele dafür zeigen die EP-B-19280 (Ausweiskarte mit elektrischen Kontaktflächen), die EP-A-142013 (Datentäger mit induktiver Datenübertragung) und Zerstörung der Daten bei mechanischem Eingriff), EP-A-168836 (Datenkarte für Geldausgabeautomaten mit optischer Datenübertragung), die EP-A-196028 (Wertkarte mit elektrischen Kontaktflächen) und die WO-A-86/04705 (Telefonwertkarte mit induktiver Datenübertragung).

Alle diese Datenträger müssen ebenfalls in einen Aufnahmeteil der Kontrolleinrichtung eingesetzt werden, sodaß sich hinsichtlich der Handhabung keine Vorteile gegenüber den passiven Datenträgern ergeben. Weitere aktive Datenträger sind mit Sende-Empfangseinrichtungen für eine distanzierte Kommunikation zwischen den Datenträgern und der Kontrolleinrichtung ausgebildet. Beispiele dafür geben die EP-A-61373, die US-A-4325146 und die US-A-4338587.

Die ebenfalls eine Sende-Empfangseinheit umfassende Kontrollstation der EP-A-61373 überprüft Datenträger bei der Kontrolle einer Zutrittsberechtigung zu Schiliften od. dgl. Bei berechtigtem Zutritt wird beispielsweise ein Drehkreuz einer Durchgangsspur freigegeben. Die Datenübertragung findet dabei insbesondere mittels Ultraschall statt.

Die US-A-4325146 zeigt ein in ähnlicher Weise arbeitendes Kontrollsystem. Hier wird eine optische Datenübertragung zwischen einer Kontrollstation und sich nähernden Fahrzeugen bzw. den in den Fahrzeugen vorhandenen Datenträgern vorgenommen, etwa an der Einfahrt zur Parkfläche. Berechtigte Fahrzeuge können damit ahne anzuhalten einen sich rechtzeitig öffnenden Schranken passieren. Die Kontrolle ist damit wesentlich beschleunigt.

Die im Vergleich zu Magnet- oder Lochkarten wesentlich teureren aktiven Datenträger lassen sich in der Massenanwendung für Zutritte mit geringem Wert vor allem wegen der hohen Kosten nicht ohne weiters verwenden. Beispielsweise für Einzelfahrkarten an Schiliften werden sie vom Publikum nicht akzeptiert. Gerade dort sind bisherige Kontrolleinrichtungen unumgänglich, obwohl eine Kontrolle aktiver Datnträger die Leistungsfähigkeit der Kontrollstation wesentlich erhöhen würde.

Die Gestehungskosten aktiver Datenträger macht aber deren Einsatz für die Zutrittskontrolle mit einem geringen Wert eines einmaligen oder gelegentlichen Zutritts unwirtschaftlich, sodaß etwa für die Mauteinhebung an Autobahnen, gemäß der US-A-4338587 Kontrolleinrichtungen für aktive, am Fahrzeug vorgesehene Datenträger mit herkömmlichen Inkassoeinrichtungen kombiniert sind. Dabei sind für jede Art der Kontrolle eigene Peripheriegeräte vorgesehen. Während ein positives Kontrollergebnis der aktiven Datenträger keine Peripheriegeräte ansteuert, werden bei negativem Kontrollergebnis Halte- und Warneinrichtungen betätigt. Beim üblichen Inkasso hingegen wird nach der Barzahlung die öffnung eines Schrankens bewirkt.

Die Erfindung hat es sich nun zur Aufgabe gestellt eine Kontrollstation der eingangs genannten Art, in der ein positives Kontrollergebnis den gesperrten Zu- oder Durchgang freigibt, für die Kontrolle passiver und aktiver Datenträger auszubilden, sodaß für alle Benützer die Wartezeit verringert und der Komfort erhöht wird.

Erfindungsgemäß wird dies nun dadurch gelöst, daß die Kontrollstation eine zweite Kontrolleinrichtung aufweist, die eine Sende-Empfangseinheit für eine distanzierte Kommunikation mit angenäherten aktiven Datenträgern umfaßt, in denen ebenfalls eine Sende-Empfangseinheit enthalten ist, und daß die beiden Kontrolleinrichtungen parallele Ausgänge aufweisen, deren mittels des wahlweise verwendeten Datenträgers erzeugte Ausgangssignale über einen Umschalter die peripheren Einrichtungen ansteuern.

Der Benützer kann dabei die Art des Datenträgers wählen und die zu kontrollierenden Daten werden in einer Initialisierungsstation in die jeweiligen Datenträger eingespeichert. Aktive Datenträger sind durch Löschen und Eingabe neuer Daten wiederholt verwendbar. Sie können daher etwa als Jahreskarten, Dauerausweise für sich wiederholende Veranstaltungen usw. eingesetzt werden, wobei in der zugehörigen, zweiten Kontrolleinrichtung der Kontrollstation nur das Gültigkeitsdatum überprüft werden muß, das bei der Wiederverwendung nach Ablauf wieder neu eingespeichert wird. Wird in der zweiten Kontrolleinrichtung auch eine fortlaufende Entwertung durchgeführt, bis ein dem Kaufpreis entsprechender "Vorrat" aufgebraucht ist, so lassen sich die Datenträger auch als Mehrfahrtenkarte, als Entrittskarte für Veranstaltungen mit Konsummöglichkeit (Gastgewerbe, Vergnügungs- und Freizeitanlagen) usw. verwenden. Vorteilhaft wird bei dieser Ausführung eine Restwertanzeige über ein Display sichtbar gemacht werden können, wobei dieser Restwert sich nach dem jeweiligen Verwendungszweck richtet, beispielsweise Anzeige des Ablaufdatums, Anzeige nach der vorletzten Fahrt einer Mehrfahrtenkarte od. dgl., um eine rechtzeitige Wiederaufwertung in einer Initialisierungsstation zu ermöglichen. Ein derartiger Datenträger könnte auch mit Pfand ausgegeben, bzw. nach seiner Verwendung wieder zurückgekauft werden, und ist auch für die Massenanwendung wirtschaftlich, da die Gestehungskosten nur einen akzeptablen Prozentsatz des verkörperten Wertes betragen.

Für die Identifizierung bzw. die Zutrittsfreigabe muß der auf Entfernung lesbare Datenträger nur in den Kontrollbereich der Sende-Empfangseinheit der zweiten Kontrolleinrichtung gebracht werden, wo in einer sehr kurzen Zeitspanne, vorzugsweise unter 1 Sekunde, die Berechtigung und/oder die Gültigkeit der Berechtigung überprüft wird.

Für Dienstleistungen mit geringem Wert, für die auch eine Ausgabe mit Pfand bzw. ein Rückkauf keine Vorteile bringt, beispielsweise einmalige Eintrittskarte, Einzelfahrkarte, Kurzzeitparkgaragenkarte usw. werden weiterhin die passiven Datenträger verwendet, die in die zugehörige, erste Kontrolleinrichtung eingesteckt, gelesen und bei positivem Kontrollergebnis weggeworfen werden. Die über den Umschalter angeschlossenen gemeinsamen Peripheriegeräte, beispielsweise eine Ampel, ein Schranken, ein Drehkreuz, bzw. ein zentraler Rechner für die Abrechnung, usw. sprechen auf jedes positive Kontrollergebnis an.

Da die Kontrolle von Benützern mit aktiven Datenträgern rascher erfolgt, ist leicht ersichtlich, daß damit der Durchgang durch die Kontrollstation für die in Reihe wartenden Benützer wesentlich beschleunigt und Wartezeiten reduziert werden. Die Zeitersparnis wird beispielsweise bei Autobahnmautstellen oder Schiliften besonders augenscheinlich.

Da von den Kontrolleinrichtungen gemeinsame Peripheriegeräte angesteuert werden, sind in einer vorteilhaften Ausführung beide Kontrolleinrichtungen auch in einem gemeinsamen Gehäuse angeordnet.

Eine besonders platzsparende, nach außen abgekapselte Konstruktion läßt sich weiters noch dadurch verwirklichen, daß eine der peripheren Einrichtungen eine im Gehäuse angeordnete mehrfärbige Ampel zur Anzeige des Kontrollergebnisses umfaßt, wobei die Sende-Empfangseinheit der zweiten Kontrolleinrichtung und die Lampen der Ampel von einer gemeinsamen Abdeckung aus mattiertem Glas überdeckt sind.

Die Sende-Empfangseinheit der zweiten Kontrolleinrichtung für Funkübertragung mit einem bevorzugten Trägerfrequenzbereich bis 250 kHz ausgelegt, sodaß nur geringe Sendeenergie benötigt wird. Dies ist vor allem für die Energieversorgung der aktiven Datenträger wesentlich. Um die wechselweise Kommunikation zwischen der zweiten Kontrolleinrichtung und den aktiven Datenträgern nicht störend zu beeinflussen, sieht eine bevorzugte Ausführung vor, daß die Trägerfrequenzen für die Datenübertragung von der Kontrollstation zum Datenträger sowie vom Datenträger zur Kontrollstation unterschiedlich sind, wobei die Sende-Empfangseinheit der Kontrollstation einen Sendeoszillator und die Sende-Empfangseinheit des Datenträgers einen Frequenzteiler enthält.

Der Kommunikationsraum der zweiten Kontrolleinrichtung wird dabei wesentlich kleiner als das zu erfassende Objekt, sodaß eine Datenübertragung nur innerhalb eine beschränkten Umfeldes der zweiten Kontrolleinrichtung erfolgen kann. Damit kann die zufällige Anwesenheit eines nicht anzusprechenden, aktiven Datenträgers mit Sicherheit ausgeschlossen und eine mutwillige Störung zumindest wesentlich erschwert werden. Dennoch ist eine bewußte und gewollte Handhabung des aktiven Datenträgers notwendig, die hinsichtlich der Aktivität des Benützers mit dem Einstecken eines passiven Datenträgers in einen Aufnahmeschlitz vergleichbar ist.

Für einen Personenerfassungsraum, etwa eine vereinzelnde Personendurchgangsspur, ist die größte Erstreckung des Kommunikationsraumes senkrecht zur Spur beispielsweise mit 10 cm bis 30 cm, vorzugsweise mit 20 cm vorgesehen, und für eine fahrzeugvereinzelnde Fahrspur kann diese zwischen 50 cm und 200 cm vorzugsweise 100 cm betragen.

In einer anderen Ausführung ist die Datenübertragung mittels Lichtwellen vorgesehen, wobei hier insbesondere der Infrarotbereich gewählt wird; es könnte jedoch auch Laserlicht eingesetzt werden. Auch bei der Datenübertragung mittels Lichtwellen ist der begrenzte Übertragungsbereich gegen Fremdeinflüsse ohne besonderen Aufwand abschirmbar. So kann dies mittles einer mit Abstand zu Sender und Empfänger vorgesehenen Begrenzungsblende für den Erfassungsraum erfolgen.

In einer weiteren Ausführung ist vorgesehen, daß die Kontrolleinrichtung zum Lesen der passiven Datenträger im Anschluß an den Einsteckschlitz einen Schreib-Lesekopf und einen Druckkopf enthält. Dadurch können Änderungen der magnetischen oder optischen Kennzeichnung bzw. mehrfache Verwendungen des passiven Datenträgers auch visuell sichtbar auf ihn aufgedruckt werden.

Nachstehend wird nun die Erfindung an Hand der Figuren der beiliegenden Zeichnungen näher beschrieben, ohne darauf beschränkt zu sein.

Es zeigen :

Fig. 1 eine schematische Darstellung einer Kontrollstation mit zwei Kontrolleinrichtungen,

Fig. 2 eine erste Ausführung einer Kontrollstation mit schematischem Teilschnitt der zweiten Kontrolleinrichtung,

Fig. 3 eine erste Ausführung eines aktiven Datenträgers zur Kommunikation mit der Kontrollstation nach Fig. 2,

Fig. 4 ein Blockschaltbild der zweiten Kontrolleinrichtung der Kontrollstation nach Fig. 2,

Fig. 5 ein Blockschaltbild des Datenträgers nach Fig. 3,

Fig. 6 eine zweispurige Kontrollanlage mit Sperren,

Fig. 7 einen schematischen Schnitt durch eine zweite Ausführung einer Kontrollstation,

Fig. 8 eine zweite Ausführung eines aktiven Datenträgers zur Kommunikation mit der Kontrollstation nach Fig. 7,

Fig. 9 einen Längsschnitt durch den Datenträger nach Fig. 8, und

Fig. 10 ein Blockschaltbild des Datenträgers nach Fig. 8.

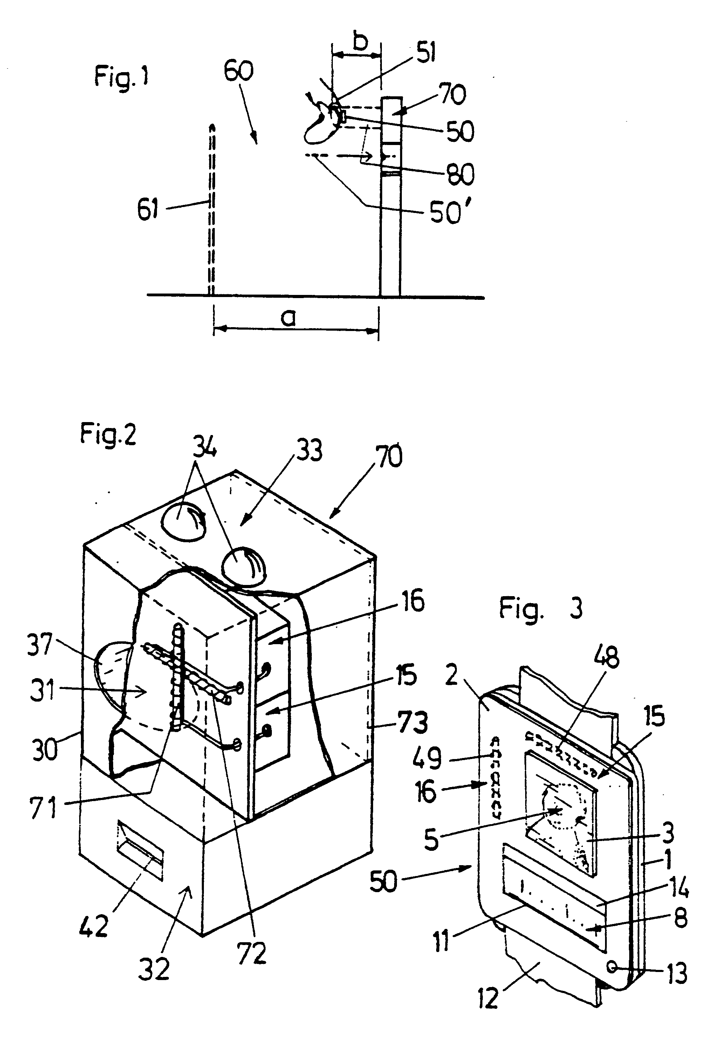

Eine Kontrollstation 70 (Fig. 1) dient der wahlweisen Kommunikation mit aktiven Datenträgern 50 und passiven Datenträgern 50' innerhalb eines eine körperliche oder auch nur gedachte Begrenzung 61 aufweisenden Erfassungsraumes 60, der in seinen Dimensionen auf das mit dem Datenträger 50, 50' versehene Objekt 51 (Person oder Gegenstand) abgestimmt ist. So kann der Erfassungsraum 60 beispielsweise eine Personendurchgangsspur mit der Größe a bilden, um die die Begrenzung 61 von der Kontrollstation 70 distanziert ist.

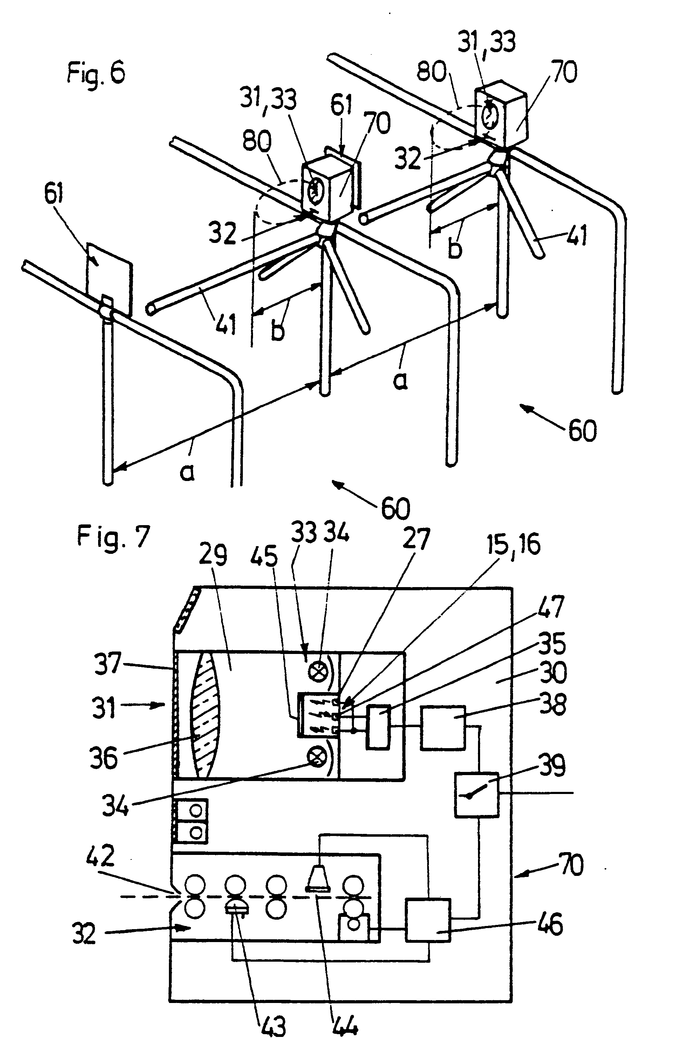

Die Kontrollstation 70 umfaßt somit zwei Kontrolleinrichtungen 31, 32, die in einem gemeinsamen Gehäuse 30 untergebracht sind. Die erste Kontrolleinrichtung 32 liest passive Datenträger 50', insbesondere Magnetkarten, Lochkarten, Karten mit Strichcode etc., die für einmalige Zutritte, wie Einzelfahrten od. dgl. gedacht sind. Sie werden in die erste Kontrolleinrichtung 32 der Kontrollstation 70 in herkömmlicher Weise eingeschoben. Ein derartiger passiver Datenträger 50' ist in Fig. 1 nur strichliert angedeutet. Die gelesenen Daten werden gemäß Fig. 7 einer Auswerteelektronik 46 zugeführt. Weiters ist ein Druckkopf 44 vorgesehen, sodaß die Kontrolle visuell sichtbar gemacht werden kann. Falls auch in einem passiven Datenträger 50' Daten geändert werden sollen, ist ein Schreib-Lesekopf 43 (Fig. 7) vorgesehen, wobei vom Druckkopf 44 auch Änderungen sichtbar gemacht werden.

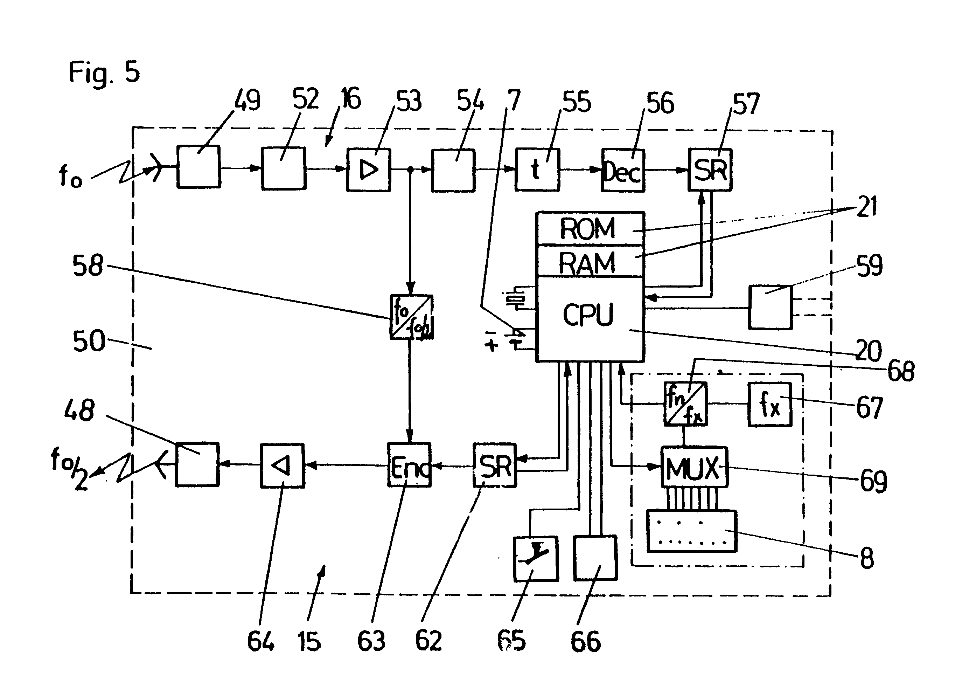

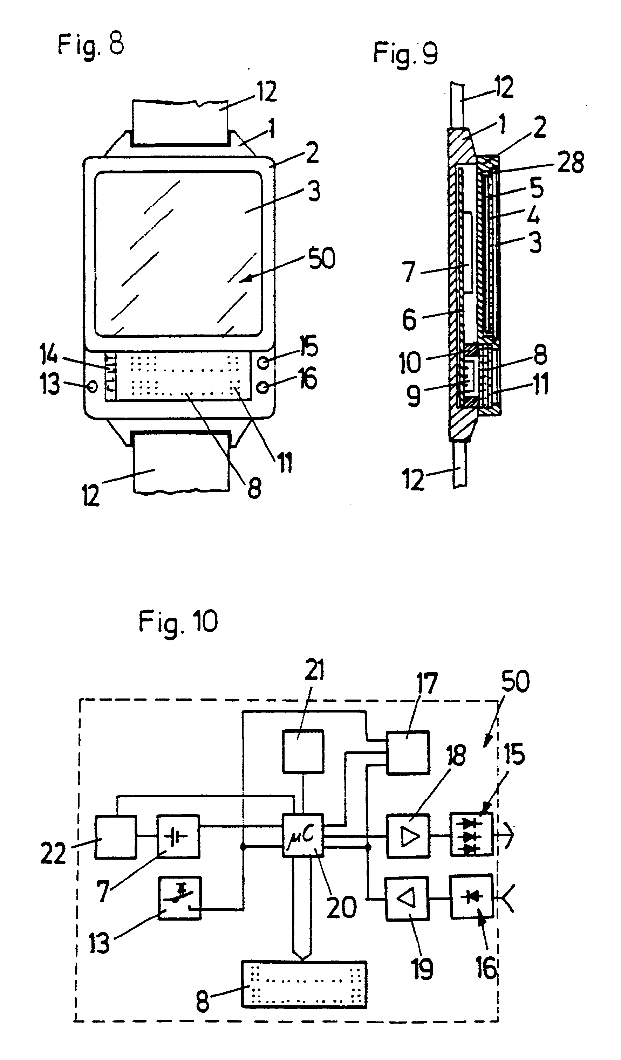

Die zweite Kontrolleinrichtung 31 ist zur Kommunikation mit aktiven Datenträgern 50 vorgesehen, die einen Mikrocomputer (Fig. 5, 10) enthalten, wobei gemäß der in den Fig. 2 bis 5 näher gezeigten ersten Ausführung die übertragung der Daten zur zweiten Kontrolleinrichtung 31 mittels Funk erfolgt. Die Sende-Empfangsfrequenzen liegen vorzugsweise in einem Bereich von 100 kHz und darunter. Dadurch können auch magnetische Antennen für Sender 15 und Empfänger 16 verwendet werden, sodaß keine unerwünschten Abschirmeffekte auftreten. Die geringe Sendeenergie beschränkt den Kommunikationsraum auf ein Umfeld 80 der Kontrollstation 70.

Da das Umfeld 80 eine maximale Erstreckung b aufweist, die wesentlich kleiner als die Größe a des Erfassungsraumes ist, muß für die Datenübertragung zwischen dem aktiven Datenträger 50 und der zweiten Kontrolleinrichtung der Datenträger 50 ins Umfeld 80 der Kontrollstation 70 gebracht werden. Dieses bedeutet somit eine Annäherung des Objektes 51 an die Kontrollstation 70 in einem Ausmaß, daß eine Störung der Kommunikation durch einen zufällig oder auch absichtlich im Erfassungsraum 60 anwesenden anderen Datenträger praktisch ausgeschlossen ist. Liegt das Maß a beispielsweise bei 50 bis 70 cm, so wird eine geeignete maximale Erstreckung b des Umfeldes 80 etwa 10 bis 30 cm betragen.

Wie aus Fig. 2 und 3 ersichtlich, sind die Sendeantennen 71, 48 und die Empfangsantenne 72, 49 sowohl in der zweiten Kontrolleinrichtung 31 der Kontrollstation 70 (Fig. 2) als auch im Datenträger 50 (Fig. 3) um 90° gegeneinander versetzt, sodaß sie sich magnetisch nicht beeinflussen. Auf Grund der geringen Erstreckung b des Kommunikationsraumes erübrigt sich im allgemeinen die Ausbildung richtungsunabhängiger Antennen. Es wäre aber durchaus denkbar, zwei gegeneinander versetzte Empfangsspulen 72, 49 in der Kontrollstation 70 und/oder im Datenträger 50 vorzusehen. Rückseitig ist das Gehäuse 30 mit einer Abschirmung 73 versehen.

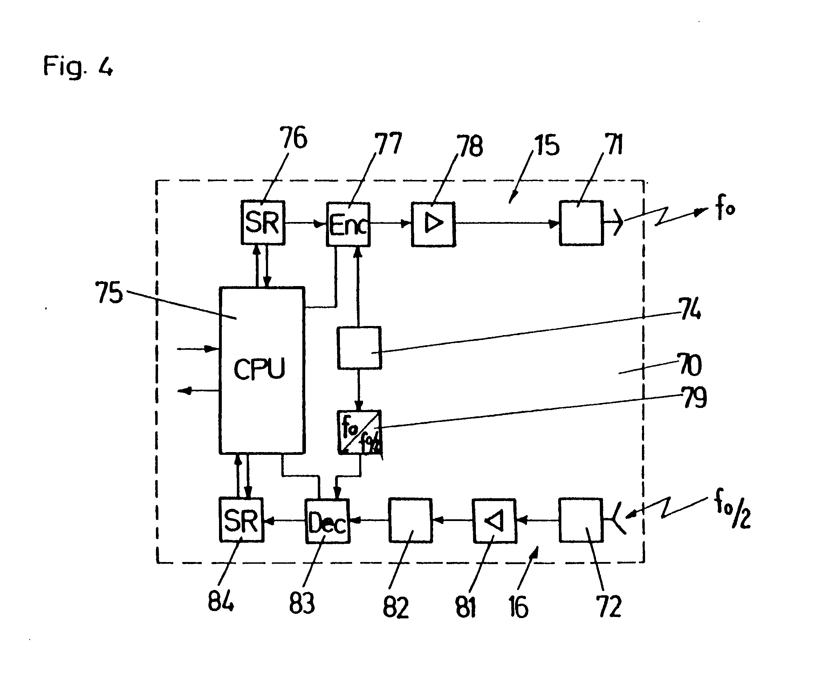

Anhand der beiden in den Fig. 4 und 5 gezeigten Blockschaltbilder der zweiten Kontrolleinrichtung 31 der Kontrollstation 70 und des Datenträgers 50 wird nachstehend die Kommunikation zwischen der Kontrollstation und dem ins Umfeld 80 angenäherten Datenträger 50 näher erläutert.

Die Kontrollstation 70 sendet mit einer Trägerfrequenz fo (z.B. 100 kHz) eine Kennummer aus. (Fig. 4) Hiezu überträgt die Zentraleinheit 75 (CPU) der Kontrollstation entsprechende Daten in ein Schieberegister 76 (SR), aus welchen diese seriell in einem Encoder 77 ausgelesen werden. Der Encoder 77 ist mit einem Oszillator 74 für die Trägerfrequenz fo verbunden. Über entsprechende Verstärker 78 wird die Sendeantenne 71 betrieben. Die von der Kontrollstation 70 abgegebenen Signale werden (Fig. 5) im Datenträger 50 von der auf die Trägerfrequenz fo abgestimmten Empfangsantenne 49 empfangen. Über einen Begrenzer 52 und einen Verstärker 53 werden die Signale einem Tiefpaß 54 zugeführt, der wiederum mit einem Decoder 56 verbunden ist.

Zwischen dem Tiefpaß 54 und dem Decoder 56 ist ein Zeitglied 55 (t) angeordnet, welches verhindert, daß zufällig empfangene Signale den Prozessor 20 (CPU) im Datenträger 50 "aufwecken". Der Decoder 56 übergibt die decodierten Daten einem Schieberegister 57 (SR), welches über einen Interrupt den Prozessor 20 aufweckt, sodaß dieser die empfangene Leserkennung übernehmen kann.

Der Prozessor 20 rechnet die Leserkennung mit einem festgelegten Algorithmus um, und sendet nun seinerseits zusätzlich eine eigene Datenträgernummer zur Kontrollstation 70 retour. Zum Sendeverkehr benötigt der Datenträger 50 die Trägerfrequenz fo. Diese wird über einen Frequenzteiler 58 (fo/$\frac{fo}{2}$) einem Encoder 63 zugeführt, welcher die entsprechenden Daten über ein Schieberegister 62 (SR) vor Prozessor 20 erhält. Die Sendefrequenz beträgt nun fo/2. Diese Schaltung hat den Vorteil, daß im Datenträger 50 kein eigener, konstanter Oszillator benötigt wird, der auf die Kontrollstation 70 abzustimmen ist. Die Signale gelangen über einen Verstärker 64 und Sendeantenne 48 des Datenträgers 50 zur Empfangsantenne 72 der zweiten Kontrolleinrichtung der Kontrollstation 70. Von dort werden sie über einen Verstärker 81 und einen Tiefpaß 82 einem Decoder 83 zugeführt.

Vom Decoder gelangen die Daten in ein Schieberegister 84 zur Zentraleinheit 75. Diese rechnet die empfangenen Daten mit demselben Algorithmus wie die Datenträger 50 um und kann so etwaige Manipulationsversuche erkennen, wobei dem Sendeoszillator 74 ein Frequenzteiler 79 zugeordnet ist. Die vom Datenträger 50 kommende gleiche Sendefrequenz fo/2 kann somit direkt verglichen werden.

Wird beispielsweise entweder die Kontrollstation 70 oder insbesondere der Datenträger 50 durch eine Fälschung simuliert, so kann der jeweilige, echte Partner nach einer bestimmten Anzahl von Übertragungsversuchen die Datenübertragung für bestimmte Zeit oder auf Dauer unterbrechen.

Nach diesem ersten Datenverkehr sind die Kontrollstation 70 und der Datenträger 50 gegenseitig erkannt, wobei zugleich eine Überprüfung der Echtheit beider Partner stattgefunden hat, sodaß der eigentliche Datenverkehr erfolgen kann, der von der konkreten Anwendung abhängig ist. Nach Abschluß dieser Datenübermittlung schaltet sich die Kontrollstation 70 für den nächsten Anwendungsfall frei und ruft wieder mit seiner Kennung bis die nächste Antwort von einem folgenden Datenträger 50 empfangen wird.

Wie bereits erwähnt, befindet sich der Prozessor 20 des Datenträgers normalerweise im Schlaf-Modus, also einer inaktiven Betriebsart mit minimalem Stromverbrauch. Er tritt nur dann in Aktion, wenn gültige Daten empfangen werden.

Weiters ist es möglich, den Prozessor 20 über eine eingebaute Taste 65 aufzuwecken, und beispielsweise den jeweiligen Status (Anzahl und Wert der eingespeicherten Berechtigungen), sowie die durchgeführten Transaktionen am Display anzuzeigen. (Fig. 5)

Schließlich ist es noch möglich, eine Tastatur 66 beispielsweise für Rechenfunktionen, zur Eingabe einer persönlichen Identifizierungsnummer (PIN) etc. anzuschließen. Dadurch können bestimmte Aktionen von der Eingabe der Identifizierungsnummer abhängig gemacht werden.

Es ist auch vorgesehen, über eine serielle Schnittstelle 59 mit dem Prozessor 20 in Verbindung zu treten.

Der Datenträger 50 weist eine eigene Umschaltung auf, um im inaktiven Betrieb minimalen Stromverbrauch zu ermöglichen. Diese Schaltung besteht aus einem Uhrenoszillator 67, (fx), einem programmierbaren Teiler 68 (fn/fx) und einem Multiplexer 69 (MUX) für das LCD-Display 8. Programmgesteuert können Gangungenauigkeiten ausgeglichen werden.

Der Speicher des Prozessors 20 hat vorteilhaft einen relativ kleinen ROM-Bereich und einen relativ großen RAM-Bereich (z.B. 1 kb und 4 kb).

Im ROM werden nur die grundsätzlichen Routinen zur Bedienung der Peripherie—Module und zum Datenverkehr abgespeichert. Im RAM sind anwendungsspezifische Programme sowie alle Daten abgespeichert. Dadurch können Änderungen leicht durchgeführt werden und alle Transaktionen auch im nachhinein überprüft werden. Die beschriebenen Module des Datenträgers 50 sind mit Ausnahme der Quarze, des LCD-Displays 8 und der Sender/Empfangsantennen 48,49 sowie einigen Peripherie-Bausteinen vorteilhaft in einem einzigen Chip integriert.

In Fig. 7 ist eine zweite Ausführung einer Kontrollstation 70 gezeigt, deren zweite Kontrolleinrichtung 31 für eine Infrarot-Datenübertragung vorgesehen ist. Sie enthält eine Sendediode 27 und eine Empfangsdiode 47, einen Infrarotfilter 45, eine Ansteuerung 35 und eine Auswerteelektronik 38, sowie die zweifärbige Ampel 33 mit einer roten und einer grünen Lampe 34. Die Sende- und Empfangsdioden 27, 47, die färbigen Lampen 34 und eine vorgesetzte Optik 36 sind in einem Aufnahmeraum 29 untergebracht, der nach außen durch eine mattierte Glasscheibe 37 abgedeckt ist.

Die je nach Art des zu prüfenden Datenträgers 50, 50' von der Auswerteelektronik 38,46 abgegebenen gleichartigen Signale werden über einen Umschalter 39 an die Ampel 33 und andere angeschlossene Peripheriegeräte wie einen Rechner, einen Schranken, ein Drehkreuz 41 usw. weitergegeben. Letzteres zeigt Fig. 6 im Beispiel einer zweispurigen Schliffftkontrollstation.

In den Fig. 8 bis 10 ist eine Ausführung eines aktiven Datenträgers für optische Datenübertragung, insbesondere mittles Infrarotwellen dargestellt.

Die im Datenträger 50 enthaltene Elektronik ist im Blockschaltbild aus Fig. 10 ersichtlich. Der zentrale Mikroprozessor 20 (µc) ist mit Infrarotsendedioden als Sender 15 mit zugehöriger Sendelogik 18, mit einer Infrarotempfangsdiode als Empfänger 16 mit zugehöriger Empfangslogik 19, der eine Bereitschaftslogik 17 zugeordnet ist, und mit einer Stromquelle 7 verbunden, wobei die Stromquelle 7, vor allem, wenn sie durch eine Batterie gebildet ist, mit einer Kontrollogik 22 versehen ist. Die in den Datenträger 50 einzugebenden Daten werden in einen Schreib-Lese-Speicher 21, insbesondere einem EEPROM oder RAM gespeichert und können über ein Flüssigkristalldisplay 8 durch Betätigung einer Taste 13 sichtbar gemacht werden. Die Stromquelle 7 kann auch eine aufladbare Batterie oder eine Solarzelle sein.

Jeder aktive Datenträger 50 weist ein Gehäuse auf, das aus einem unterteil 1 und einem Oberteil 2 besteht (Fig. 3, 8, 9). Das Gehäuse ist insbesondere aus Kunststoff, wobei die beiden Teile 1, 2 vorzugsweise miteinander verschweißt sind. Der Unterteil 1 des Gehäuses kann dabei in verschiedenen Ausführungsformen vorliegen. Wie gezeigt sind am Unterteil 1 Aufnahmen für ein Armband 12 vorgesehen, sodaß ein aktiver Datenträger 50 ähnlich einer Uhr am Unterarm oder Handgelenk (Objekt 51, Fig. 1) getragen werden kann. Der Unterteil 1 kann auch mit einer Anssteckklammer versehen sein und ein zusätzliches Beschriftungsfeld tragen. Das Gehäuse kann auch als Schlüsselanhänger ausgebildet sein, wobei im Unterteil eine an einem Schlüsselring befestigte Schnur auf einer Federrolle aufgewickelt ist. Der Unterteil 1 kann auch mit einer Selbstklebeschicht versehen sein. Die beiden letztgenannten Ausführungen sind vor allem für Fahrzeuge gedacht (Parkgaragen, Mautstellen usw.).

Der Oberteil 2 weist eine Fassung 28 für ein Foto 5 od. dgl. auf, die von einer Abdeckung 3 verschlossen ist. Die Abdeckung 3 trägt an der Innenseite eine Klebestoffbeschichtung 4, an der das Foto 5 angeklebt ist. Die Art des Klebestoffs ist dabei so gewählt, daß bei Ablösung des Fotos 5 dieses zerstört wird, und damit der Austausch gegen ein anderes Foto sichtbar wird. Unterhalb der Abdeckung 3 ist in das Oberteil 2 eine Abdeckung 11 eingesetzt, unter dem das Flüssigkristalldisplay 8 angeordnet ist. Neben dem Display bzw. der Fotoabdeckung 3 sind der Sender 15 und der Empfänger 16 für die Aufnahme und Abgabe der Daten vorgesehen. Die Taste 13 dient, wie erwähnt, zur Sichtbarmachung der im Datenträger 50 enthaltenen Daten auf dem Display 8. auf dem Display 8 ist auch ein Nummernfeld 14 mit einer visuell lesbaren, individuellen Nummer vorgesehen, die beispielsweise eingeprägt oder aufgedruckt sein kann. Dieselbe "laufende Nummer" kann weiters auch an der Abdeckung 3 bzw. auch am Foto 5 vorgesehen werden. Das Display 8 wird in üblicher Weise auf Tastendruck über Kontakte 10 von einem Chip 9 angespeist, der auf einem Stubstrat angeordnet ist. Die Stromversorgung erfolgt von einer Stromquelle 7, beispielsweise einer Batterie, einer Solarzelle, usw.

Bildet der Datenträger eine Mehrfahrtenkarte bzw. Punktekarte, so wird in der Kontrollstation 70 nicht nur die Gültigkeit überprüft, sondern eine Teilentwertung vorgenommen. Bei dieser Art des aktiven Datenträgers 50 ist die zusätzliche Enspeicherung seiner individuellen Nummer von besonderem Vorteil, da über die zweite Kontrolleinrichtung der Kontrollstation auch eine Buchführung über die fortlaufende Entwertung erfolgen kann, wenn diese an einen Rechner angeschlossen ist, und die jeweiligen Daten an ein Nummernjournal übertragen werden. Da der aktive Datenträger 50 einen Mikrocomputer enthält, können Informationen und Funktionen nach freiem Ermessen zwischen dem Datenträger 50 und der Kontrollstation 70 aufgeteilt werden, die einander ergänzen oder gegebenenfalls auch überschneiden.

## Patentansprüche

1. Kontrollstation zur überprüfung von Daten in Datenträgern (50, 50'), insbesondere bei der Kontrolle einer Zutrittsberechtigung oder dergleichen, mit einer Kontrolleinrichtung (32) zum Lesen von einzusteckenden, passiven Datenträgern (50'), auf denen die Daten in beispielsweise magnetischer oder optischer Form gespeichert sind, wobei das Kontrollergebnis an zumindest eine periphere Einrichtung, insbesondere an eine Zutrittssperre weitergeleitet wird, dadurch gekennzeichnet, daß die Kontrollstation (70) eine zweite Kontrolleinrichtung (31) aufweist, die eine Sende-Empfangseinheit (15, 16) für eine distanzierte Kommunikation mit angenäherten aktiven Datenträgern (50) umfaßt, in denen ebenfalls eine Sende-Empfangseinheit (15, 16) enthalten ist, und daß die beiden Kontrolleinrichtungen (31, 32) parallele Ausgänge aufweisen, deren mittels des wahlweise verwendeten Datenträgers erzeugte Ausgangssignale über einen Umschalter (39) die peripheren Einrichtungen ansteuern.

2. Kontrollstation nach Anspruch 1, dadurch gekennzeichnet, daß die beiden Kontrolleinrichtungen (31, 32) in einem gemeinsamen Gehäuse (30) angeordnet sind.

3. Kontrollstation nach Anspruch 2, dadurch gekennzeichnet, daß eine der peripheren Einrichtungen eine im Gehäuse (30) angeordnete mehrfärbige Ampel (33) zur Anzeige des Kontrollergebnisses umfaßt, wobei die Sende-Empfangseinheit (15, 16) der zweiten Kontrolleinrichtung (31) und die Lampen (34) der Ampel (33) von einer gemeinsamen Abdeckung (37) aus mattiertem Glas überdeckt sind.

4. Kontrollstation nach Anspruch 1, dadurch gekennzeichnet, daß die Trägerfrequenzen für die Datenübertragung von der Kontrollstation (70) zum Datenträger (50) sowie vom Datenträger (50) zur Kontrollstation (70) unterschiedlich sind, wobei die Sende-Empfangseinheit (15, 16) der Kontrollstation (70) einen Sendeoszillator (74) und die Sende-Empfangseinheit (15, 16) des Datenträgers (50) einen Frequenzteiler (58) enthält.

5. Kontrollstation nach Anspruch 1, dadurch gekennzeichnet, daß jede Sende-Empfangseinheit (15, 16) für Lichtwellenübertragung, insbesondere im Infrarotbereich, ausgelegt ist.

6. Kontrollstation nach Anspruch 4 oder 5, dadurch gekennzeichnet, daß mit Abstand zu Sender (15) und Empfänger (16) eine Begrenzungsblende (61) für den Erfassungsraum (60) vargesehen ist.

7. Kontrollstation nach Anspruch 1 oder 2, dadurch gekennzeichnet, daß die Kontrolleinrichtung (32) zum lesen der passiven Datenträger (50') im Anschluß an den Einsteckschlitz (42) einen Schreib-Lesekopf (43) und einen Druckkopf (44) enthält.

## Claims

1. Control station for the examination of data in data carriers (50, 50'), especially in controlling the right to entry or the like, with a control device (32) for reading inserted passive data carriers (50') on which the data are stored, e.g. in magnetic or optical form, whereby the control result is sent to at least one peripheral device, in particular to an entry barrier, characterized in that the control station (70) has a second control device (31) comprising a transmitter/receiver unit (15, 16) for distant communication with approached data carriers (50) also having a transmitter/receiver unit (15, 16), and that both control devices (31, 32) comprise parallel outputs, the output signals generated by the data carrier optionally used controlling peripheral devices via a conversion unit (39).

2. Control station according to claim 1, characterized in that both control devices (31, 32) are arranged in a common housing (30).

3. Control station according to claim 2, wherein one of the peripheral devices is formed by a multicolor signal lamp (33) arranged in the housing (30) to display the control result, whereby the transmitter/receiver unit (15, 16) of the second control device (31) and the lamps (34) of the signal lamp (33) are covered by a common covering (37) of frosted glass.

4. Control station according to claim 1, characterized in that the carrier frequencies for the data transfer from the control station (70) to the data carrier (50) as well as from the data carrier (50) to the control station (70) are different, whereby the transmitter/receiver unit (15, 16) of the control station (70) comprises a transmission oscillator (74), and that the transmitter/receiver unit (15, 16) of the data carrier (50) comprises a frequency divider (58).

5. Control station according to claim 1, characterized in that each transmitter/receiver unit (15, 16) is designed for light wave transfer, especially in the infrared range.

6. Control station according to claim 4 or 5, characterized in that at a distance to the transmitter (15) and the receiver (16) there is a limiting blind (61) for the acquisition space (60).

7. Control station according to claim 1 or 2, characterized in that the control device (32) for reading passive data carriers (50') comprises a write/read head (43) and a print head (44) subsequent to an insert slot (42).

## Revendications

1. Poste de contrôle destiné à vérifier des données dans des supports de données (50, 50'), notamment lors du contrôle d'une autorisation d'accès ou circonstance similaire, présentant un dispositif de contrôle (32) destiné à lire des supports de données passifs (50') conçus pour être insérés, et sur lesquels les données sont par exemple mémorisées sous forme magnétique ou optique, le résultat du contrôle étant transmis à au moins une installation périphérique, notamment à une barrière d'accès, caractérisé par le fait que le poste de contrôle (70) comporte un second dispositif de contrôle (31) qui renferme une unité émettrice-réceptrice (15, 16) pour une communication, à distance, avec des supports de données actifs (50) proches, dans lesquels une unité émettrice-réceptrice (15, 16) est également intégrée ; et par le fait que les deux dispositifs de contrôle (31, 32) présentent des sorties parallèles dont les signaux de sortie, engendrés au moyen du support de données sélectivement utilisé, activent les installations périphériques par l'intermédiaire d'un commutateur (39).

2. Poste de contrôle selon la revendication 1, caractérisé par le fait que les deux dispositifs de contrôle (31, 32) sont logés dans un boîtier commun (30).

3. Poste de contrôle selon la revendication 2, caractérisé par le fait que l'une des installations périphériques englobe une lanterne multicolore (33) logée dans le boîtier (30), en vue d'afficher le résultat du contrôle, l'unité émettrice-réceptrice (15, 16) du second dispositif de contrôle (31) et les lampes (34) de la lanterne (33) étant recouvertes par un cache commun (37) en verre dépoli.

4. Poste de contrôle selon la revendication 1, caractérisé par le fait que les fréquences porteuses pour la transmission des données du poste de contrôle (70) au support de données (50), ainsi que du support de données (50) au poste de contrôle (70), sont différentes, l'unité émettrice-réceptrice (15, 16) du poste de contrôle (70) renfermant un oscillateur d'émission (74), et l'unité émettrice-réceptrice (15, 16) du support de données (50) renfermant un diviseur de fréquence (58).

5. Poste de contrôle selon la revendication 1, caractérisé par le fait que chaque unité émettrice-réceptrice (15, 16) est conçue pour une transmission des ondes lumineuses, notamment dans la plage infrarouge.

6. Poste de contrôle selon la revendication 4 ou 5, caractérisé par le fait qu'un diaphragme (61), assurant la délimitation de la zone de saisie (60), est prévu à distance de l'émetteur (15) et du récepteur (16).

7. Poste de contrôle selon la revendication 1 ou 2, caractérisé par le fait que le dispositif de contrôle (32) renferme une tête (43) d'écriture-lecture et une tête d'impression (44) dans la continuité de la fente d'insertion (42), en vue de lire les supports de données passifs (50').

Fig. 1

Fig. 2

Fig. 3

Fig. 4

EP 0 327 540 B1

Fig. 5

EP 0 327 540 B1

Fig. 6

Fig. 7

Fig. 8

Fig. 9

Fig. 10